# EUROPEAN PATENT SPECIFICATION

(11) **EP 0 489 425 B1**
(45) Date of publication and mention of the grant of the patent: **04.09.1996**
(21) Application number: 91120846.0
(22) Date of filing: 04.12.1991
(51) Int. Cl.: C08F 2/20

(54) **Vinyl polymerization particle size control**
Vinylpolymerisation mit Steuerung der Teilchengrösse
Polymérisation vinylique avec contrôle de la taille des particules

(30) Priority: 06.12.1990 US 622959
(43) Date of publication of application: 10.06.1992
(73) Proprietor: AQUALON COMPANY, Wilmington Delaware 19850-5417 (US)
(72) Inventor: Kroon, Gijsbert, NL-3364 AN Sliedrecht (NL)
(74) Representative: Lederer, Franz, Dr.

(56) References cited:
- FR-A- 1 499 119
- US-A- 4 684 704
- US-A- 4 868 238

## Description

The invention relates to control of particle size for polymers prepared from vinyl monomers. In particular, a cellulose ether allows preparation of a homogenous particle size distribution of the polymer.

Suspension polymerization is a technique used to produce micron size and larger particles, whereas emulsion polymerization produces latices having a particle size less than 1.0 micron. In suspension polymerization a non-water soluble initiator is dissolved in the monomer, whereas in emulsion polymerization a water soluble initiator forms an initiator radical in the aqueous phase. Differences between suspension polymerization and emulsion polymerization are discussed in U.S. patents 4,229,569; 4,093,776 and 4,552,939 as well as in technical encyclopedias.

It is known to use cellulose ethers and other polysaccharide polymer thickeners to control vinyl monomer polymerization. U.S. patent 3,786,115 describes a process for styrene polymerization in the presence of 0.01 to 1% hydroxyethylcellulose, 0.01 to 3% substantially water insoluble inorganic phosphate and/or carbonate and 0.001 to 0.02% anionic surface active agent. EPO publication 0 068 298 discloses styrene suspension polymerization employing calcium or magnesium phosphate in a water phase. U.S. patent 4,352,916 discloses latex formation from vinyl monomers in the presence of a hydrophobically modified hydroxyethylcellulose wherein the vinyl monomer is selected from styrene, methylmethacrylate, vinyl chloride, diethylamino ethylmethacrylate and butylmethlacrylate. U.S. patent 4,609,512 discloses particle size control with an aqueous phase including such salts as calcium chloride, iron (III) chloride, copper nitrate, zinc sulfate, calcium chloride, cobalt (III) chloride and magnesium chloride. U.S. patent 4,833,198 discloses the preparation of a laurylmethacrylate/acrylic acid copolymer and use of copolymer in combination with fumed silicon dioxide as a suspension agent for vinyl polymerization. U.S. patent 4,868,238 discloses suspension polymerization of a vinyl monomer in the presence of 0.01 to 2.0% carboxymethyl hydrophobically modified hydroxyethylcellulose and optionally an electrolyte or polyelectrolyte. U.S. Patent 4,910,273 discloses a partially saponified polyvinyl alcohol to serve as a suspension stabilizer for vinyl chloride polymerization.

Yet in spite of what was known in the art, a need still remained for a means to provide polymer particles with a more homogeneous particle size distribution. It is in meeting this need that the present invention provides an advance in the state of the art of vinyl monomer polymerization.

A process for controlling particle size of polymers prepared from vinyl monomers in the presence of a thickening agent of a cellulose ether derivative is characterized in that the cellulose ether derivative is one or more of:
(a) hydroxyethylcellulose with a molecular weight of 300,000 to 1,000,000 and a molar substitution (M.S.) of 1.5 to 3.5;
(b) hydrophobically modified hydroxyethylcellulose with a molecular weight of 100,000 to 800,000 and an M.S. of 1.5 to 4.1 with a hydrophobic modification chain of C₄ to C₂₂ in an amount of 0.1 to 1.0 percent by weight based on the total weight of the hydrophobically modified hydroxyethylcellulose, which is used in an amount of 0.01 to 0.6% by weight;
(c) carboxymethylmethylcellulose, carboxymethylmethylhydroxyethylcellulose or carboxymethylmethylhydroxypropylcellulose with a molecular weight of 20,000 to 400,000 with a degree of carboxymethyl substitution of from 0.05 to 1.0 which is used in an amount of 0.01-0.50% by weight based on the weight of the vinyl monomer;
such that a polymer prepared from the vinyl monomer has a homogeneity of particle size distribution (PSD) which is 60% or higher and the weight percentage of latex is below 0.1% by weight based on the starting weight of vinyl monomer selected from the group of styrene, methylmethacrylate, vinyl chloride, diethylaminoethylmethacrylate and butyl methacrylate.

It is preferred that the thickening agent be used in combination with tri-calcium phosphate (TCP).

It has been discovered that improved particle homogeneity can be obtained without the use of metal salts via the careful selection of suitable cellulose ether derivatives. It was a surprising result to find that out of all available polysaccharide derivatives there were only a few cellulose ethers derivatives with limited molecular weight range and type and degree of substitution which were effective in the process of the invention.

Effective amounts of hydroxyethylcellulose, carboxymethylmethylcellulose, carboxymethylmethylhydroxyethylcellulose and carboxymethylmethylhydroxypropylcellulose in a polymerization reaction range from 0.01 to 0.50% by weight based on the weight of vinyl monomer, whereas in the case of hydrophobically modified hydroxyethylcellulose the effective amount ranges from 0.01 to 0.60% by weight. A preferred range is 0.05 to 0.30% by weight. All of these materials are available from the Aqualon Company.

Preferably, the hydrophobically modified hydroxyethylcellulose is modified with hexadecyl, butyl or decyl in an amount of 0.2 to 0.7% by weight based on the total weight of the hydrophobically modified hydroxyethylcellulose.

Carboxymethyl degree of substitution (D.S.) should be from 0.05 to 1.0, preferably from 0.2 to 0.6. Hydroxypropyl substitution should be from 2 to 12% by weight and hydroxyethyl substitution from 1 to 15% by weight. The carboxymethylcellulose, carboxymethylmethylhydroxypropylcellulose or carboxymethylmethylhydroxyethylcellulose has a preferred degree of carboxymethyl substitution of 0.2 to 0.8 and a methoxyl substitution of 20 to 30%.

Suspension polymerizations were run to test the effectiveness of the suspending agent using variations of the following recipe:

| | |
|---|---|
| Vinyl monomer | 300 - 610g |
| Deionized water | 740 - 1050 g |
| Initiator | 0.6 - 2.0 g |
| Stabilizer | 0.1 - 3.0 g |
| Tri-calcium phosphate | 0 - 0.25 |
| Reaction temperature | 75°C |
| Reaction time | 5 - 8 hours |
| Stirrer speed | 600 rpm |

In each case the polymerization was run at atmospheric conditions under a nitrogen blanket. After cooling to room temperature the suspension was filtered through a Büchner funnel and washed with deionized water, methyl alcohol and finally with deionized water.

The following examples illustrate the practice of the invention which has industrial applicability for vinyl polymerization.

### Example 1

### Styrene Polymerized with High Molecular Weight HEC

The following formulation was used with hydroxyethylcellulose (HEC) available from the Aqualon Company to give the results shown in Table 1.

| | |
|---|---|
| Styrene | 610 g |
| Deionized water | 740 g |
| Initiator | 2 g |
| Stabilizer | Varied towards average PS-particle size of 400 µm |
| Reaction temperature | 90°C |
| Reaction time | 8 hours |
| Stirrer speed | 600 rpm |

**Table 1**

| Example | Molecular Weight of HEC | Use Level HEC (% w/w) | PSD (%) | Emulsion Polystyrene (% w/w) |
|---|---|---|---|---|
| Control | 290000 (250 G) | 0.28 | 64 | 0.2 |
| Ex. 1A | 690000 (250 M) | 0.20 | 66 | 0.1 |
| Ex. 1B | 1000000 (250 HH) | 0.18 | 70 | 0.1 |

The above examples 1A and 1B demonstrate the positive effect of these high MW types over the standard type Natrosol® 250G hydroxyethylcellulose with respect to stabilizing efficiency and homogeneity of the particle size distribution.

### Example 2

### Methylmethacrylate Polymerized With High Molecular Weight HEC

The following formulation was used with hydroxyethylcellulose (HEC) available from the Aqualon Company as shown in Table 2.

| | |
|---|---|
| Methylmethacrylate | 300 g |
| Deionized water | 1050 g |
| Initiator | 0.6 g |
| Stabilizer | Varied towards average PMMA -particle size of 400 µm |
| Reaction temperature | 75°C |
| Reaction time | 5 hours |
| Stirrer speed | 600 rpm |

**Table 2**

| Example | Molecular Weight of HEC | Use Level HEC (% w/w) | PSD (%) |
|---|---|---|---|
| Control | 290000 (250 G) | 0.18 | 63 |
| Ex. 2 | 690000 (250 M) | 0.14 | 70 |

From above table we can draw the conclusion that in the methylmethacrylate system the same advantages were observed as in Example 1 with styrene polymerization.

### Example 3

### Effect of Hydrophobic Modification and Molecular Weight of HMHEC and its combination With a Water Insoluble Salt Like Tri-Calcium Phosphate

Using the formulation of Example 1, a positive effect was observed for hydrophobically modified hydroxyethylcellulose (HMHEC) over non-modified HEC when combining these products with a water insoluble salt like tri-calciumphosphate (TCP).

Moreover particle size control of the polystyrene beads could be accomplished by controlling the hydrophobic modification in HMHEC with respect to type and amount in combination with the molecular weight of the HEC backbone. Table 3 contain comparative results.

**Table 3**

| HMHEC VERSUS HEC IN COMBINATION WITH TCP | | | | | |
|---|---|---|---|---|---|
| | Hydrophobe | | TCP (% w/w) | WSP (% w/w) | PSD (%) |
| | Type | w/w (%) | | | |
| Control Natrosol® 250G HEC | - | - | - | 0.28 | 64 |
| Example 3A HMHEC | Hexadecyl | 0.4-0.6 | - | 0.25 | 73 |
| Control Natrosol® 250G HEC | - | - | 0.25 | 0.32 | 51 |
| Example 3B HMHEC | Hexadecyl | 0.4-0.6 | 0.25 | 0.23 | 75 |

The above table demonstrates the positive influence of hexadecyl modification on particle size control and stabilizing efficiency.

### Example 4

Example 3 was varied by using different hydrophobic alkyl chains on the hydrophobically modified HEC. Table 4 gives comparative results.

**Table 4**

| THE EFFECT OF THE LENGTH OF THE HYDROPHOBIC ALKYL CHAIN | | | | | |
|---|---|---|---|---|---|
| | Hydrophobe | | WSP (% w/w) | TCP (% w/w) | PSD (%) |
| | Type | w/w (%) | | | |
| Control Natrosol® 250G | - | - | 0.28 | 0.25 | 51 |
| Example 4A | Butyl | 0.4-0.6 | 0.27 | 0.25 | 66 |
| Example 4B | Decyl | 0.4-0.6 | 0.25 | 0.25 | 65 |
| Example 4C | Hexadecyl | 0.4-0.6 | 0.23 | 0.25 | 75 |

Despite the fact that a length of the alkyl chain longer than C16 has not been tested yet, a clear tendency can be observed, i.e., an improvement in stabilizing efficiency as well as particle size control resulting in a more homogeneous particle size distribution.

### Example 5

Example 3 was varied by using varying amounts of hexadecyl modification. Table 5 gives comparative results.

**Table 5**

| THE EFFECT OF VARYING HEXADECYL MODIFICATION | | | | | |
|---|---|---|---|---|---|
| | Hydrophobe | | TCP (% w/w) | WSP (% w/w) | PSD (%) |
| | Type | w/w (%) | | | |
| Control Natrosol® 250G | - | - | 0.28 | 0.25 | 51 |
| Example 5A | Hexadecyl | 0.2-0.4 | 0.18 | 0.25 | 62 |
| Example 5B | Hexadecyl | 0.4-0.6 | 0.23 | 0.25 | 75 |
| Example 5C | Hexadecyl | 0.6-1.0 | 0.22 | 0.25 | 72 |

As can be observed from the above table, an optimum hydrophobe level exists in the order of 0.5% w/w with respect to particle size distribution.

### Example 6

Example 3 was varied by using different molecular weight HEC backbone with equivalent hexadecyl substitution. Table 6 gives comparative results.

**Table 6**

| EFFECT OF MOLECULAR WEIGHT OF HEC BACKBONE | | | | | | |
|---|---|---|---|---|---|---|
| | Hydrophobe | | Molecular Weight | WSP (% w/w) | TCP (% w/w) | PSD (%) |
| | Type | w/w (%) | | | | |
| Reference Example 6A | Hexadecyl | 0.4-0.6 | 90000 | 0.18 | 0.25 | 62 |
| Example 6B | Hexadecyl | 0.4-0.6 | 290000 | 0.23 | 0.25 | 75 |
| Example 6C | Hexadecyl | 0.4-0.6 | 690000 | 0.22 | 0.25 | 72 |

The experimental data shows that an optimum molecular weight exists for the HMHEC for an effective particle size control.

The examples 4, 5 and 6 demonstrate how the suspension polymerized polystyrene beads can be controlled by means of molecular weight of HEC backbone, type and amount of hydrophobic modification in combination with an inorganic pickering stabilizer like TCP. On top the formation of emulsion polystyrene appeared to be very low: <0.1% w/w on styrene monomer.

### Example 7

The methylmethacrylate formulation of Example 2 was used with a hexadecyl hydrophobe HEC. Comparative results are shown in Table 7.

**Table 7**

| | Hydrophobe | | Molecular Weight | WSP (% w/w) | TCP (% w/w) | PSD (%) |
|---|---|---|---|---|---|---|
| | Type | w/w (%) | | | | |
| Control | 250G | 0.4-0.6 | 290000 | 0.32 | 0.25 | 51 |
| Example 7 | Hexadecyl | 0.4-0.6 | 290000 | 0.08 | 0.25 | 70 |

Example 7 shows that the hydrophobically modified HEC of Example 6 is also an effective stabilizer in the S-polymerization of methylmethacrylate.

### Example 8

Carboxymethylated cellulose derivatives were evaluated in combination with tri-calcium phosphate for effective stabilization in suspension polymerization. Table 8 gives comparative results where all polymers are available from Aqualon Company.

**Table 8**

| COMBINATIONS OF CARBOXYMETHYLATED CELLULOSE DERIVATIVES WITH TRI-CALCIUM PHOSPHATE | | | | | |
|---|---|---|---|---|---|
| | | WSP (% w/w) | TCP (% w/w) | Particle Size (microns) | PSD (%) |
| Control | Blanose™ 7M31D | 0.25 | - | Coagulum | |
| Control | Blanose™ 7M31D | 0.25 | 0.25 | Coagulum | |
| Ex. 8A | Blanose™ 7M31D/Natrosol® 250G | 0.25/0.1 | 0.25 | 335 | 63 |
| Ex. 8B | CMHEC 420G | 0.25 | 0.25 | 563 | 50 |
| Ex. 8C | CMMHEC | 0.25 | | 400 | 48 |
| Ex. 8D | CMMHEC * | 0.18 | 0.25 | 400 | 62 |
| Ex. 8E | CMMHPC ** | 0.14 | - | 400 | 26 |
| Ex. 8F | CMMHPC ** | 0.11 | 0.25 | 400 | 78 |

| | | | | | |
|---|---|---|---|---|---|
| * CM-DS ∼ 0.2 2% Brookfield 7,000 mPa.s | | | | | |
| ** CM-DS ∼ 0.3 2% Brookfield 13,500 mPa.s | | | | | |

The above samples show several combinations of carboxymethylated cellulose derivatives with TCP. From these examples it was shown that a combination of carboxymethylated MHEC and TCP as well as carboxymethylated with TCP gave excellent particle size control with narrow PSD's. These combinations performed much better than these cellulose derivatives alone.

## Claims

1. A process for controlling particle size of polymers, prepared by a suspension polymerization process, from vinyl monomers in the presence of an initiator and a thickening agent, characterized in that the thickening agent is a cellulose ether derivative of one or more of:
(a) hydroxyethylcellulose with a molecular weight of 300,000 to 1,000,000 and a molar substitution (M.S.) of 1.5 to 3.5 which is used in an amount of 0.01 to 0.50% by weight based on the weight of vinyl monomer;
(b) hydrophobically modified hydroxyethylcellulose with a molecular weight of 100,000 to 800,000 and an M.S. of 1.5 to 4.1 with a hydrophobic modification chain of C₄ to C₂₂ in an amount of 0.1 to 1.0 percent by weight based on the total weight of the hydrophobically modified hydroxyethylcellulose which is used in an amount of 0.01 to 0.6% by weight;
(c) carboxymethylmethylcellulose, carboxymethylmethylhydroxyethylcellulose or carboxymethylmethylhydroxypropylcellulose with a molecular weight of 20,000 to 400,000 with a degree of carboxymethyl substitution of from 0.05 to 1.0 which is used in an amount of 0.01 to 0.50% by weight based on the weight of vinyl monomer;
such that a polymer prepared from the vinyl monomer has a homogeneity of particle size distribution (PSD) with 60% or higher and the weight percentage of latex is below 0.1% by weight based on the starting weight of the vinyl monomer selected from the group of styrene, methylmethacrylate, vinyl chloride, diethylaminoethylmethacrylate and butylmethacrylate.

2. The process of claim 1 where the hydroxyethylcellulose has a molecular weight above 500,000 and an M.S. of 2.0 to 3.0.

3. The process of claim 2 where tri-calcium phosphate (TCP) is used in combination with hydroxyethylcellulose.

4. The process of claim 1 where the hydrophobically modified hydroxyethylcellulose is modified with hexadecyl, butyl or decyl.

5. The process of claim 4 where the modification is in an amount of 0.2 to 0.7 percent by weight based on the total weight of the hydrophobically modified hydroxyethylcellulose.

6. The process of claim 5 where the hydrophobically modified hydroxyethylcellulose is used in combination with TCP.

7. The process of claim 1 where carboxymethylmethylcellulose, carboxymethylmethylhydroxyethylcellulose or carboxymethylmethylhydroxypropylcellulose have a degree of carboxymethyl substitution of 0.2 to 0.6.

8. The process of claim 7 where the thickening agent is used in combination with TCP.

9. The process of claim 1 where carboxymethylcellulose has a degree of carboxymethyl substitution of 0.2 to 0.8 and a methoxyl substitution of 20 to 30%.

10. The process of claim 1 where carboxymethylmethylhydroxypropylcellulose has a degree of carboxymethyl substitution of 0.2 to 0.8 and a methoxyl substitution of 20 to 30%.

11. The process of claim 1 where carboxymethylmethylhydroxyethylcellulose has a degree of carboxymethyl substitution of 0.2 to 0.8 and a methoxyl substitution of 20 to 30%.

## Patentansprüche

1. Verfahren zur Steuerung der Partikelgröße von Polymeren, die mittels eines Suspensionspolymerisations-Verfahrens aus Vinylmonomeren in Gegenwart eines Initiators und eines Verdickungsmittels hergestellt werden, dadurch gekennzeichnet, daß das Verdickungsmittel eines oder mehrere der folgenden Celluloseetherderivate ist:
(a) Hydroxyethylcellulose mit einem Molekulargewicht von 300.000 bis 1.000.000 und einer Molsubstitution (MS) von 1,5 bis 3,5, die in einer Menge von 0,01 bis 0,50 Gew.-%, basierend auf dem Gewicht des Vinylmonomers, verwendet wird;
(b) hydrophob modifizierte Hydroxyethylcellulose mit einem Molekulargewicht von 100.000 bis 800.000 und einer MS von 1,5 bis 4,1 mit einer hydrophoben Modifikationskette von C₄ bis C₂₂ in einer Menge von 0,1 bis 1,0 Gew.-%, basierend auf dem Gesamtgewicht der hydrophob modifizierten Hydroxyethylcellulose, die in einer Menge von 0,01 bis 0,6 Gew.-% verwendet wird;
(c) Carboxymethylmethylcellulose, Carboxymethylmethylhydroxyethylcellulose, Carboxymethylmethylhydroxypropylcellulose mit einem Molekulargewicht von 20.000 bis 400.000 mit einem Carboxymethyl-Substitutionsgrad von 0,05 bis 1,0, die in einer Menge von 0,01 bis 0,50 Gew.-%, basierend auf dem Gewicht des Vinylmonomers, verwendet wird;
so daß ein aus dem Vinylmonomer hergestelltes Polymer eine Homogenität der Partikelgrößenverteilung (PGV) von 60% oder höher hat und der Gewichtsprozentsatz von Latex unter 0,1 Gew.-% liegt, basierend auf dem Ausgangsgewicht des Vinylmonomers, das ausgewählt ist aus der Gruppe von Styrol, Methylmethacrylat, Vinylchlorid, Diethylaminoethylmethacrylat und Butylmethacrylat.

2. Verfahren gemäß Anspruch 1, worin die Hydroxyethylcellulose ein Molekulargewicht über 500.000 und eine MS von 2,0 bis 3,0 hat.

3. Verfahren gemäß Anspruch 2, worin Tricalciumphosphat (TCP) in Kombination mit Hydroxyethylcellulose verwendet wird.

4. Verfahren gemäß Anspruch 1, worin die hydrophob modifizierte Hydroxyethylcellulose mit Hexadecyl, Butyl oder Decyl modifiziert ist.

5. Verfahren gemäß Anspruch 4, worin die Modifikation in einer Menge von 0,2 bis 0,7 Gew.-%, basierend auf dem Gesamtgewicht der hydrophob modifizierten Hydroxyethylcellulose, vorliegt.

6. Verfahren gemäß Anspruch 5, worin die hydrophob modifizierte Hydroxyethylcellulose in Kombination mit TCP verwendet wird.

7. Verfahren gemäß Anspruch 1, worin die Carboxymethylmethylcellulose, Carboxymethylmethylhydroxyethylcellulose, oder Carboxymethylmethylhydroxypropylcellulose einen Carboxymethyl-Substitutionsgrad von 0,2 bis 0,6 haben.

8. Verfahren gemäß Anspruch 7, worin das Verdickungsmittel in Kombination mit TCP verwendet wird.

9. Verfahren gemäß Anspruch 1, worin die Carboxymethylcellulose einen Carboxymethyl-Substitutionsgrad von 0,2 bis 0,8 und eine Methoxyl-Substitution von 20 bis 30% hat.

10. Verfahren gemäß Anspruch 1, worin die Carboxymethylmethylhydroxypropylcellulose einen Carboxymethyl-Substitutionsgrad von 0,2 bis 0,8 und eine Methoxyl-Substitution von 20 bis 30% hat.

11. Verfahren gemäß Anspruch 1, worin die Carboxymethylmethylhydroxyethylcellulose einen Carboxymethyl-Substitutionsgrad von 0,2 bis 0,8 und eine Methoxyl-Substitution von 20 bis 30% hat.

## Revendications

1. Procédé pour régler le calibre des particules de polymères préparés par mise en oeuvre d'un procédé de polymérisation en suspension à partir de monomères vinyliques et en présence d'un amorceur et d'un agent épaississant, caractérisé en ce que l'agent épaississant est un dérivé d'un éther de cellulose d'une ou plusieurs de substances qui suivent :
(a) hydroxyéthylcellulose d'un poids moléculaire de 300.000 à 1.000.000 et d'une substitution molaire (S.M.) de 1,5 à 3,5, qui est utilisée en une proportion de 0,01 à 0,50% en poids, sur base du poids du monomère vinylique,
(b) hydroxyéthylcellulose modifiée de manière à la rendre hydrophobe, d'un poids moléculaire de 100.000 à 800.000 et d'une S.M. de 1,5 à 4,1 avec une chaîne de modification hydrophobe en C₄ à C₂₂, en une proportion de 0,1 à 1,0% en poids sur base du poids total de l'hydroxyéthylcellulose modifiée pour la rendre hydrophobe, que l'on utilise en une proportion de 0,01 à 0,6% en poids,
(c) carboxyméthylméthylcellulose, carboxyméthylméthylhydroryéthylcellulose ou carboxyméthylméthylhydroxypropylcellulose d'un poids moléculaire de 20.000 à 400.000 avec un degré de substitution carboxyméthylique qui varie de 0,05 à 1,0, que l'on utilise en une proportion de 0,01 à 0,50% en poids, sur base du poids du monomère vinylique,
en une manière telle qu'un polymère préparé à partir du monomère vinylique possède une homogénéité de la distribution du calibre des particules (DCP) de 60% et plus et que le pourcentage pondéral de latex soit inférieur à 0,1% en poids, sur base du poids de départ du monomère vinylique choisi dans le groupe formé par le styrène, le méthacrylate de méthyle, le chlorure de vinyle, le méthacrylate de diéthylaminoéthyle et le méthacrylate de butyle.

2. Procédé suivant la revendication 1, caractérisé en ce que l'hydroxyéthylcellulose possède un poids moléculaire supérieur à 500.000 et une S.M. de 2,0 à 3,0.

3. Procédé suivant la revendication 2, caractérisé en ce que l'on utilise le phosphate tricalcique (PTC) en combinaison avec l'hydroxyéthylcellulose.

4. Procédé suivant la revendication 1, caractérisé en ce que l'hydroxyéthylcellulose modifiée pour la rendre hydrophobe est modifiée avec des radicaux hexadécyle, butyle ou décyle.

5. Procédé suivant la revendication 4, caractérisé en ce que la modification s'effectue en une proportion de 0,2 à 0,7% en poids, sur base du poids total de l'hydroxyéthylcellulose modifiée en vue de la rendre hydrophobe.

6. Procédé suivant la revendication 5, caractérisé en ce que l'hydroxyéthylcellulose modifiée pour la rendre hydrophobe est utilisée en combinaison avec du PTC.

7. Procédé suivant la revendication 1, caractérisé en ce que la carboxyméthylméthylcellulose, la carboxyméthylméthylhydroxyéthylcellulose ou la carboxyméthylméthylhydroxypropylcellulose possède un degré de substitution carboxyméthylique de 0,2 à 0,6.

8. Procédé suivant la revendication 7, caractérisé en ce qu'on utilise l'agent épaississant en combinaison avec du PTC.

9. Procédé suivant la revendication 1, caractérisé en ce que la carboxyméthylcellulose possède un degré de substitution carboxyméthylique de 0,2 à 0,8 et une substitution méthoxylique de 20 à 30%.

10. Procédé suivant la revendication 1, caractérisé en ce que la carboxyméthylméthylpropylcellulose possède un degré de substitution carboxyméthylique de 0,2 à 0,8 et une substitution méthoxylique de 20 à 30%.

11. Procédé suivant la revendication 1, caractérisé en ce que la carboxyméthylméthylhydroxyéthylcellulose possède un degré de substitution carboxyméthylique de 0,2 à 0,8 et une substitution méthoxylique de 20 à 30%.
